# EUROPEAN PATENT APPLICATION

(11) **EP 4 568 179 A1**
(43) Date of publication of application: **11.06.2025**
(21) Application number: 24193481.9
(22) Date of filing: 08.08.2024
(51) Int. Cl.: H04L 9/40

(54) **USER SPACE FIREWALL MANAGER**

(30) Priority: 07.12.2023 US 202318532287
(71) Applicant: McAfee, LLC, San Jose, CA 95002 (US)
(72) Inventor: XIAO, Li, Kitchener, N2M 5G6 (CA); BELL, Douglas Richard, Heidelberg, N0B 2M1 (CA)
(74) Representative: Maiwald GmbH

(57) **Abstract**

There is disclosed herein a computer-implemented software system and method. The method is to execute within a non-kernel space of a host computer and includes asynchronously monitoring network activity of network-enabled applications of the host computer. Responsive to the monitoring, and based on network behavior of a userspace application, the software creates one or more firewall rules for a kernel-mode firewall and causes the kernel-mode firewall to enforce the one more firewall rules.

## Description

### Field of the Specification

This application relates in general to computer security, and more particularly though not exclusively to computer security and, more particularly, a user space firewall manager.

### Background

Firewalls are a well-known method of managing network traffic and can block or allow traffic based on, for example, source IP, destination IP, source port, destination port, packet size, or other factors.

### Brief Description of the Drawings

The present disclosure is best understood from the following detailed description when read with the accompanying FIGURES. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion. Furthermore, the various block diagrams illustrated herein disclose only one illustrative arrangement of logical elements. Those elements may be rearranged in different configurations, and elements shown in one block may, in appropriate circumstances, be moved to a different block or configuration.
**FIGURE 1** is a block diagram of an illustrative computing apparatus.
**FIGURE 2** is a signal flow diagram illustrating signals and information that may be passed between various components in this system.
**FIGURE 3** is a block diagram of an illustrative computing apparatus.
**FIGURE 4** is a signal flow diagram illustrating the use of a user space firewall manager.
**FIGURE 5** is a block diagram of selected elements of a user space firewall manager.
**FIGURE 6** discloses a flowchart of a method of managing firewall rules.
**FIGURE 7** is a block diagram of selected elements of a security ecosystem.
**FIGURE 8** is a block diagram of selected elements of a hardware platform.
**FIGURE 9** is a block diagram of selected elements of a system-on-a-chip (SoC).

### Summary

There is disclosed herein a computer-implemented software system and method. The method is to execute within a non-kernel space of a host computer, and includes asynchronously monitoring network activity of network-enabled applications of the host computer. Responsive to the monitoring, and based on network behavior of a userspace application, the software creates one or more firewall rules for a kernel-mode firewall, and causes the kernel-mode firewall to enforce the one more firewall rules.

### Embodiments of the Disclosure

The following disclosure provides many different embodiments, or examples, for implementing different features of the present disclosure. Specific examples of components and arrangements are described below to simplify the present disclosure. These are, of course, merely examples and are not intended to be limiting. Further, the present disclosure may repeat reference numerals and/or letters in the various examples. This repetition is for the purpose of simplicity and clarity and does not in itself dictate a relationship between the various embodiments and/or configurations discussed. Different embodiments may have different advantages, and no particular advantage is necessarily required of any embodiment.

### Overview

For decades, firewalls have been an integral part of network security for computing devices, from cellular phones, standalone laptops and desktops, tablets, all the way up to large data centers. A firewall may include certain firewall rules that block or allow connections based on low-level traffic properties, such as source IP, destination IP, source port, destination port, packet size, and combinations thereof. Firewall rules are generally stored in an access control list (ACL). Firewalls can operate on different levels of the traditional seven-layer OSI network stack model. For example, firewalls traditionally operate on layer 3 of the OSI stack, which is the network layer. This is usually the lowest layer that exists in software when there are physical network connections. Other firewalls may operate at higher levels, such as layer 7, or the application layer. Traditionally, firewalls have been implemented in the kernel space.

Application firewalls are generally firewalls that operate up to the application layer of the OSI model. Application firewalls may be divided into network-based and host-based application firewalls. Because application firewalls operate on a higher level of the OSI stack, they have greater visibility into properties of the traffic, such as application names, operating system events, and other information that is not available at layer 3 of the OSI model. These application firewalls are generally considered third-generation firewalls and may have visibility into any data available at layer 7 of the OSI stack. Although application firewalls operate at a higher level of the OSI stack than traditional layer 3 firewalls, they may still generally operate at a relatively low level of the operating system. Historically, application firewalls have had a network driver that inspects every packet into and out of an application. Application firewalls then enforce those policies immediately on the application. However, application firewalls sit in a "hot code" path at the kernel level, and thus performance is critical. Errors in the application firewall can become a critical bottleneck or can even crash the computer.

Another difficulty with application firewalls is changes in the computing industry. Computer users want more privacy and security. Thus, many of the data that were traditionally available to an application firewall are no longer available. For example, the majority of web connections now are managed with HTTP over TLS rather than unencrypted HTTP, so an application may not have an opportunity to inspect packets because they are encrypted. Furthermore, many users and web browsers have now switched to encrypted DNS, such as with DNS over HTTPS or DNS over TLS. Thus, an application firewall no longer has an opportunity to inspect DNS queries, which traditionally gave an opportunity to check queried domain names against a reputation database or cloud service. Thus, kernel mode network drivers are losing network traffic visibility because of standards like secure DNS and TLS 1.3/ESNI/ECH. Network drivers can no longer see unencrypted HTTPS or DOH/DOT packets for the majority of traffic.

Furthermore, because there are many network technologies and complex network stacks that have been introduced in recent years, network kernel mode network drivers may introduce compatibility issues. It can be very difficult to test drivers under the many possible combinations of network environments and stacks, and issues may include lower throughput, loss of network connectivity, or even system crashes or kernel panics/blue screens.

Furthermore, it can be difficult to maintain network drivers. A network driver may require special kernel mode development knowledge and skills and may need to be certified, for example, by Microsoft HLK and WHQL certifications for Microsoft Windows or by open-source development teams for the Linux or BSD kernel that is used in Mac OS X.

Because of these challenges, kernel mode application firewalls may lose some of their attractiveness. The present specification provides a user space application firewall manager that can interoperate with a kernel space native firewall, which may be, for example, the built-in firewall of the operating system or a third-party firewall. The user space firewall manager of the present specification does not need to integrate closely with the kernel space application firewall. In this context, close integration may refer to an integration that requires special knowledge of, hooks into, or other intricate integration with the kernel mode application firewall. Instead, the user space firewall manager of the present specification may use only publicly published APIs or even configuration files or registry keys for the kernel mode or native firewall.

The firewall manager of the present specification may use existing features provided by the operating system to monitor application network activities, identify potential threats, and, when threats are found, leverage a native firewall engine to block malicious activity. Advantageously, the firewall manager of the present specification may maintain compatibility with other network security products while managing the firewall.

This provides separation of the data stream that provides inspection data for the firewall manager from the kernel mode application or driver that actually blocks the traffic (e.g., a native firewall). The native firewall that actually blocks the traffic does not need to consult other data sources to determine which traffic to block or to make decisions about how and when to block traffic. Rather, the native firewall can rely on static firewall rules which are written by the user space firewall manager.

Advantageously, the user space firewall manager may have little or negligible performance impact on applications that are being filtered because security processing may be performed asynchronously. The firewall manager may consider many different data sources, which may include data sources not available to a native firewall, such as would be available at the network packet level. These additional data sources are available for the firewall manager to leverage and act upon them before an application tries to use network resources. In cases where an application is permitted to operate on the network before the firewall manager makes a reliable decision, the firewall manager can asynchronously determine how to act on that application. Many of the decision paths that the firewall manager will act on have been designed to operate within a native firewall. Thus, they are designed to provide minimal human perceptible impact on network activities. When these decision paths are used asynchronously, an application may be permitted to begin its network operations, but those operations can be interrupted very quickly if the activity is found to be malicious or otherwise undesirable. For example, the user space firewall manager may make decisions on the order of milliseconds to seconds, which provides ample opportunity to block most malicious network activity. A malicious activity is generally expected to either upload or download a fairly substantial volume of data. When malicious activity is detected, these malicious uploads or downloads can be interrupted before substantial useful work can be done.

An additional advantage of the user space firewall manager is that it does not rely in the development and maintenance of a network driver and thus does not carry the support burden of a network driver.

Yet another advantage is that, in the present specification, the system may separate input data streams, threat identification, and blocking enforcement into three discrete and independent components. Thus, any of these three can be extended or improved independently without affecting the other two so long as backward compatibility is maintained. For example, a threat identification component may integrate with a traditional antivirus agent while the input data stream can pull data from third-party sources, such as a browser plug-in, a cloud-based reputation service, or other. In a use case, the firewall manager could signal the AV agent to rescan a process for malware or could leverage the AV agent to block applications from launching at all. Thus, the firewall manager may have greater flexibility to perform protective action than a simple kernel mode firewall would have.

Under the present specification, the discrete components can link loosely and can also draw connections between seemingly unrelated events using, for example, heuristic data or machine learning. Such events may be linked to an application to determine when something malicious may be occurring. Furthermore, by linking multiple data points, the system can determine that an application should be blocked from accessing the network either fully or partially.

To determine which network activity may or may not be allowed on a particular device, the network manager may - at the application level - leverage other sources of information apart from the network activity itself. This improves on solutions that rely solely on information, such as IP reputation, TCP/UDP port information, and local and remote IP addresses. The system may also use application file binary, MD5/SHA hashes, or other available data to make decisions. In one illustration, the firewall manager may subscribe to operating system DNS event publication. This enables the system to see which addresses are being queried.

In an illustrative use case, an application not already characterized may attempt network access. Because the application is not yet characterized, the network access is permitted in the first instance. However, the firewall manager may asynchronously analyze the application, other data sources, any information available to a traditional firewall, DNS queries from the application, operating system events, or any other data that may be useful to determine whether the application should be allowed to continue communicating on the network. Furthermore, the firewall manager may query external sources such as cloud-based reputation services to further refine its decisions, such as getting URL or IP address reputations, uploading a hash of the application to a service to determine whether other devices have encountered the same application binary, or querying other third-party or cloud-based solutions for additional information. Upon receiving the requested information and determining a reputation for the operation, the third-party firewall manager may determine whether to write a static firewall rule to the native firewall. If so, the firewall manager can write the static rule, apply the rule, and cause the firewall to immediately begin enforcing the rule. This may interrupt any malicious activity that the application has undertaken in the interim. Actions taken by the firewall manager may include block, allow, or delay access until a decision is made.

Further advantageously, the asynchronous techniques illustrated herein may alter the ability of an application to detect if it is being filtered by a local application firewall. Some malicious applications may use such detection to try to work around firewall restrictions. However, if their ability to detect such activity is interrupted, they may have a more difficult time detecting the activity and working around it. Some existing blocking techniques can be detected by an application based on timing, analysis, or other means of providing opportunity for the application to alter its behavior based on the detection.

Data sources that may be used in connection with the present specification include, but are not limited to:
1. Domain and hostname reputation based on system DNS query logs;
2. Process behavior based on anti-malware analysis;
3. File reputation;
4. Third-party digital certificates verified by the application to indicate the SSL or binaries it may be interacting with.

The system of the present specification allows data sources to be monitored at all appropriate times, which allows control of the application's future network access without a currently pending network operation in process.

### Selected Examples

The foregoing can be used to build or embody several example implementations, according to the teachings of the present specification. Some example implementations are included here as nonlimiting illustrations of these teachings.

Example 1 includes one or more tangible, non-transitory computer-readable storage media having stored thereon executable instructions to provide a security application, the security application to: within a non-kernel space, asynchronously monitor network activity of a network-enabled application; based on the asynchronous monitoring, create one or more firewall rules for a kernel-mode firewall; and cause the kernel-mode firewall to enforce the one more firewall rules.

Example 2 includes the one or more tangible, non-transitory computer-readable media of example 1, wherein the non-kernel space is userspace.

Example 3 includes the one or more tangible, non-transitory computer-readable media of example 1, wherein the one or more firewall rules are static firewall rules.

Example 4 includes the one or more tangible, non-transitory computer-readable media of example 1, wherein the kernel-mode firewall is an operating system native firewall.

Example 5 includes the one or more tangible, non-transitory computer-readable media of example 1, wherein the kernel-mode firewall is a third-party firewall.

Example 6 includes the one or more tangible, non-transitory computer-readable media of example 1, wherein the security application is not tightly integrated with the kernel-mode firewall.

Example 7 includes the one or more tangible, non-transitory computer-readable media of example 6, wherein the security application is sourced from a vendor different from a vendor that sourced the kernel-mode firewall.

Example 8 includes the one or more tangible, non-transitory computer-readable media of example 6, wherein the security application communicates with the kernel-mode firewall only via a published interface definition.

Example 9 includes the one or more tangible, non-transitory computer-readable media of example 1, wherein asynchronously monitoring behavior of the networked application comprises subscribing to domain name system (DNS) query events from a local operating system.

Example 10 includes the one or more tangible, non-transitory computer-readable media of example 9, wherein asynchronously monitoring behavior of the network-enabled application further comprises querying a cloud service for reputations for domain names or internet protocol (IP) addresses resolved via DNS queries.

Example 11 includes the one or more tangible, non-transitory computer-readable media of example 1, wherein the security application is to determine, within less than approximately five seconds, a firewall action for the network-enabled application.

Example 12 includes the one or more tangible, non-transitory computer-readable media of example 11, wherein the security application is to create a firewall rule to block an ongoing network operation for the network-enabled application, upon determining that the network-enabled application performs a malicious activity.

Example 13 includes the one or more tangible, non-transitory computer-readable media of example 1, further comprising instructions for a browser plugin to monitor browser activity.

Example 14 includes the one or more tangible, non-transitory computer-readable media of example 1, wherein the instructions are further to determine that the network-enabled application does not use an operating system (OS)-provided domain name system (DNS) client, and block network access for the network-enabled application.

Example 15 includes the one or more tangible, non-transitory computer-readable media of example 14, wherein the instructions are further to notify a user that the network-enabled application has been blocked because it circumvents the OS-provided DNS client.

Example 16 includes the one or mo computer-implemented software method, the method to execute within a non-kernel space of a host computer re tangible, non-transitory computer-readable media of example 14, wherein the instructions are further to allow network access for the network-enabled application after determining that the network-enabled application is a web browser.

Example 17 includes the one or more tangible, non-transitory computer-readable media of example 1, wherein the instructions are to create a firewall rule to block specific domains or internet protocol (IP) addresses for the network-enabled application.

Example 18 includes the one or more tangible, non-transitory computer-readable media of example 1, wherein creating the one or more firewall rules comprises determining that multiple domain names resolve to a common internet protocol (IP) address, and applying a first rule to a first domain of the IP address, and a second rule to a second domain of the IP address.

Example 19 includes the one or more tangible, non-transitory computer-readable media of example 18, wherein the first rule is to block the IP address, and the second rule is to allow the IP address.

Example 20 includes the one or more tangible, non-transitory computer-readable media of example 18, wherein the instructions are to apply the first rule after determining that a most recent DNS query that resolved to the IP address was for the first domain, and apply the second rule after determining that the most recent DNS query that resolved to the IP address was for the second domain.

Example 21 includes a computer-implemented software method, the method to execute within a non-kernel space of a host computer, the method comprising: asynchronously monitoring network activity of network-enabled applications of the host computer; responsive to the monitoring, and based on network behavior of a userspace application, create one or more firewall rules for a kernel-mode firewall; and cause the kernel-mode firewall to enforce the one more firewall rules.

Example 22 includes the computer-implemented software method of example 21, wherein the non-kernel space is userspace.

Example 23 includes the computer-implemented software method of example 21, wherein the one or more firewall rules are static firewall rules.

Example 24 includes the computer-implemented software method of example 21, wherein the kernel-mode firewall is an operating system native firewall.

Example 25 includes the computer-implemented software method of example 21, wherein the kernel-mode firewall is a third-party firewall.

Example 26 includes the computer-implemented software method of example 21, further comprising communicating with the kernel-mode firewall only via a published interface definition.

Example 27 includes the computer-implemented software method of example 21, wherein asynchronously monitoring behavior of the network-enabled applications comprises subscribing to domain name system (DNS) query events from a local operating system.

Example 28 includes the computer-implemented software method of example 27, wherein asynchronously monitoring behavior of the network-enabled applications further comprises querying a cloud service for reputations for domain names or internet protocol (IP) addresses resolved via DNS queries.

Example 29 includes the computer-implemented software method of example 21, further comprising determining, within less than approximately five seconds, a firewall action for the userspace application.

Example 30 includes the computer-implemented software method of example 29, further comprising creating a firewall rule to block an ongoing network operation for the userspace application, upon determining that the userspace application performs a malicious activity.

Example 31 includes the computer-implemented software method of example 21, further comprising providing a browser plugin to monitor browser activity.

Example 32 includes the computer-implemented software method of example 21, further comprising determining that the userspace application does not use an operating system (OS)-provided domain name system (DNS) client, and block network access for the userspace application.

Example 33 includes the computer-implemented software method of example 32, further comprising notifying a user that the userspace application has been blocked because it circumvents the OS-provided DNS client.

Example 34 includes the computer-implemented software method of example 32, further comprising allowing network access for the userspace application after determining that the userspace application is a web browser.

Example 35 includes the computer-implemented software method of example 21, further comprising creating a firewall rule to block specific domains or internet protocol (IP) addresses for the userspace application.

Example 36 includes the computer-implemented software method of example 21, wherein creating the one or more firewall rules comprises determining that multiple domain names resolve to a common internet protocol (IP) address, and applying a first rule to a first domain of the IP address, and a second rule to a second domain of the IP address.

Example 37 includes the computer-implemented software method of example 36, wherein the first rule is to block the IP address, and the second rule is to allow the IP address.

Example 38 includes the computer-implemented software method of example 36, further comprising applying the first rule after determining that a most recent DNS query that resolved to the IP address was for the first domain, and applying the second rule after determining that the most recent DNS query that resolved to the IP address was for the second domain.

Example 39 includes the apparatus comprising means for performing the method of any of examples 21 - 38.

Example 40 includes the apparatus of example 39, wherein the means for performing the method comprise a processor and a memory.

Example 41 includes the apparatus of example 40, wherein the memory comprises machine-readable instructions that, when executed, cause the apparatus to perform the method of any of examples 21 - 38.

Example 42 includes the apparatus of any of examples 39 - 41, wherein the apparatus is a computing system.

Example 43 includes the least one computer readable medium comprising instructions that, when executed, implement a method or realize an apparatus as in any of examples 21 - 42.

Example 44 includes a computing device, comprising: a processor circuit and a memory; an operating system comprising a kernel space and a non-kernel space; and instructions encoded within the memory to instruct the processor circuit to provide a security application, the security application to: within the non-kernel space, asynchronously monitor network activity of a network-enabled application; based on the asynchronous monitoring, create one or more firewall rules for a kernel-mode firewall; and cause the kernel-mode firewall to enforce the one more firewall rules.

Example 45 includes the computing device of example 44, wherein the non-kernel space is userspace.

Example 46 includes the computing device of example 44, wherein the one or more firewall rules are static firewall rules.

Example 47 includes the computing device of example 44, wherein the kernel-mode firewall is an operating system native firewall.

Example 48 includes the computing device of example 44, wherein the kernel-mode firewall is a third-party firewall.

Example 49 includes the computing device of example 44, wherein the security application is not tightly integrated with the kernel-mode firewall.

Example 50 includes the computing device of example 49, wherein the security application is sourced from a vendor different from a vendor that sourced the kernel-mode firewall.

Example 51 includes the computing device of example 50, wherein the security application communicates with the kernel-mode firewall only via a published interface definition.

Example 52 includes the computing device of example 44, wherein asynchronously monitoring behavior of the networked application comprises subscribing to domain name system (DNS) query events from a local operating system.

Example 53 includes the computing device of example 52, wherein asynchronously monitoring behavior of the network-enabled application further comprises querying a cloud service for reputations for domain names or internet protocol (IP) addresses resolved via DNS queries.

Example 54 includes the computing device of example 44, wherein the security application is to determine, within less than approximately five seconds, a firewall action for the network-enabled application.

Example 55 includes the computing device of example 54, wherein the security application is to create a firewall rule to block an ongoing network operation for the network-enabled application, upon determining that the network-enabled application performs a malicious activity.

Example 56 includes the computing device of example 44, further comprising instructions for a browser plugin to monitor browser activity.

Example 57 includes the computing device of example 44, wherein the instructions are further to determine that the network-enabled application does not use an operating system (OS)-provided domain name system (DNS) client, and block network access for the network-enabled application.

Example 58 includes the computing device of example 57, wherein the instructions are further to notify a user that the network-enabled application has been blocked because it circumvents the OS-provided DNS client.

Example 59 includes the computing device of example 57, wherein the instructions are further to allow network access for the network-enabled application after determining that the network-enabled application is a web browser.

Example 60 includes the computing device of example 44, wherein the instructions are to create a firewall rule to block specific domains or internet protocol (IP) addresses for the network-enabled application.

Example 61 includes the computing device of example 44, wherein creating the one or more firewall rules comprises determining that multiple domain names resolve to a common internet protocol (IP) address, and applying a first rule to a first domain of the IP address, and a second rule to a second domain of the IP address.

Example 62 includes the computing device of example 61, wherein the first rule is to block the IP address, and the second rule is to allow the IP address.

Example 64 includes the computing device of example 61, wherein the instructions are to apply the first rule after determining that a most recent DNS query that resolved to the IP address was for the first domain, and apply the second rule after determining that the most recent DNS query that resolved to the IP address was for the second domain.

### Detailed Description of the Drawings

A system and method for a user space firewall manager will now be described with more particular reference to the attached FIGURES. It should be noted that throughout the FIGURES, certain reference numerals may be repeated to indicate that a particular device or block is referenced multiple times across several FIGURES. In other cases, similar elements may be given new numbers in different FIGURES. Neither of these practices is intended to require a particular relationship between the various embodiments disclosed. In certain examples, a genus or class of elements may be referred to by a reference numeral ("widget 10"), while individual species or examples of the element may be referred to by a hyphenated numeral ("first specific widget 10-1" and "second specific widget 10-2").

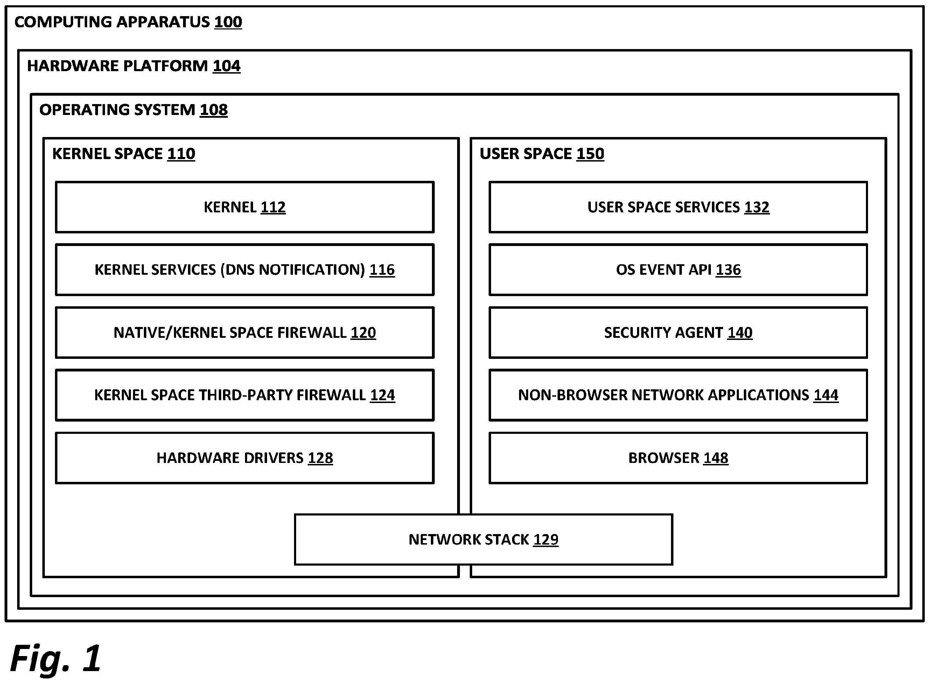

**FIGURE 1** is a block diagram of an illustrative computing apparatus 100. Computing apparatus 100 may be, for example, an endpoint computer, such as one used by an enterprise or home user. Computing apparatus 100 may be, by way of illustration, a desktop computer, a workstation, a laptop, a tablet, a mobile phone, or other suitable computing device.

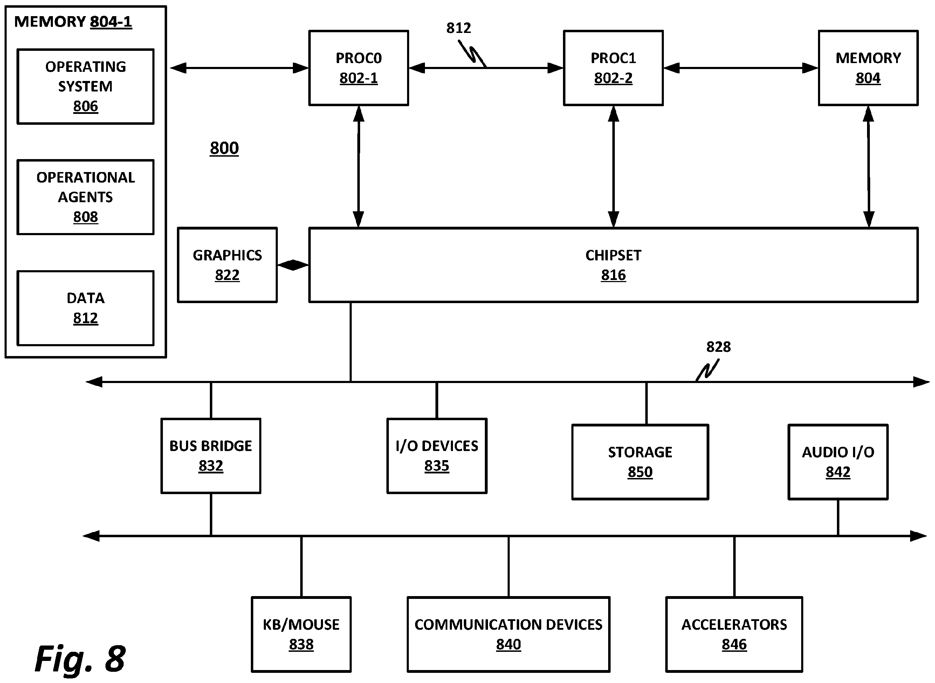

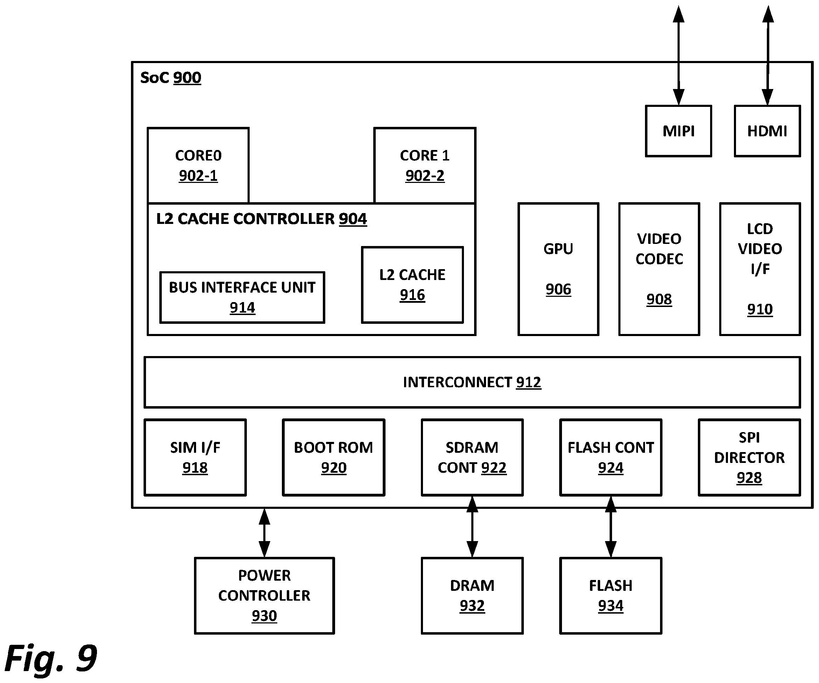

Computing apparatus 100 operates on a hardware platform 104. An example of a hardware platform is illustrated in FIGURES 8 and 9 below. Hardware platform 104 may include at least a processor, a memory, and a network interface.

An operating system 108 may run on hardware platform 104. Operating system 108 may be any suitable open or closed operating system, such as Microsoft Windows, Linux, UNIX, Mac OS, Android, iOS, or similar. Operating system 108 may conventionally divide operating system services into a kernel space 110 and a user space 150. Kernel space 110 and user space 150 are provided as broad illustrative categories of divisions and, generally, kernel space 110 is considered to be the OS kernel and its drivers, which operate at a very low system level and with high privileges. In contrast, user space 150 operates generally at a higher level with fewer privileges and may, for example, be cognizant of user access controls and other restrictions.

A network stack 129 may partially span both kernel space 110 and user space 150. For example, network stack 129 may include the traditional seven layer OSI network stack, in which certain levels, for example up to level 5, operate within kernel space 110 while other levels, such as layer 6 and 7, operate within user space 150. However, this should not be understood to be a hard dividing line and, depending on the application and OS architecture, various layers of network stack 129 may appropriately reside within kernel space 110 and/or user space 150.

Within kernel space 110, there is a kernel 112, such as the Windows kernel, the Linux kernel, the BSD kernel, or some other appropriate kernel. Kernel space 110 may also include a number of kernel services 116. For example, one kernel service may include a DNS notification service, which monitors DNS queries made via the kernel's DNS driver and provides notifications of those DNS queries and the associated responses to applications that subscribe to the service.

Within kernel space 110, there may be a native or kernel space firewall 120. This may be a firewall natively provided by the operating system or the OS vendor. Most modern operating systems include some kind of built-in kernel space firewall application. There may also be a kernel space third-party firewall 124. This may be a firewall provided by a software vendor and may replace or supplement native firewall 120. Both native firewall 120 and third-party firewall 124 may be configurable via appropriate APIs, configuration files, or other interfaces to provide static or dynamic firewall rules.

Kernel space 110 may also include a number of hardware drivers 128, which provide an interface between hardware platform 104 and various applications within user space 150. Hardware drivers 128 may notably include a network driver to operate a wired or wireless network interface.

Operating system 108 may also provide user space 150. This may include user space services 132, which may operate with fewer or different privileges as compared to kernel services 116. Notably, a DNS query subscription service could also be provided as a user space service 132.

An operating system event API 136 provides an API for applications to subscribe to and consume services from the operating system. A security agent 140 may provide security services to the operating system, such as antivirus, firewall management, reputation services, and other security.

User space 150 may also host a browser 148 and other non-browser network applications 144. These are applications that access the network for various purposes and are generally subject to static or dynamic firewall rules enforced by one or both of native firewall 120 and kernel space third-party firewall 124. Network applications 144 and/or browser 148 may also include various plug-ins that provide additional functionality. An example of one such plug-in is a URL reputation manager, such as McAfee WebAdvisor or other.

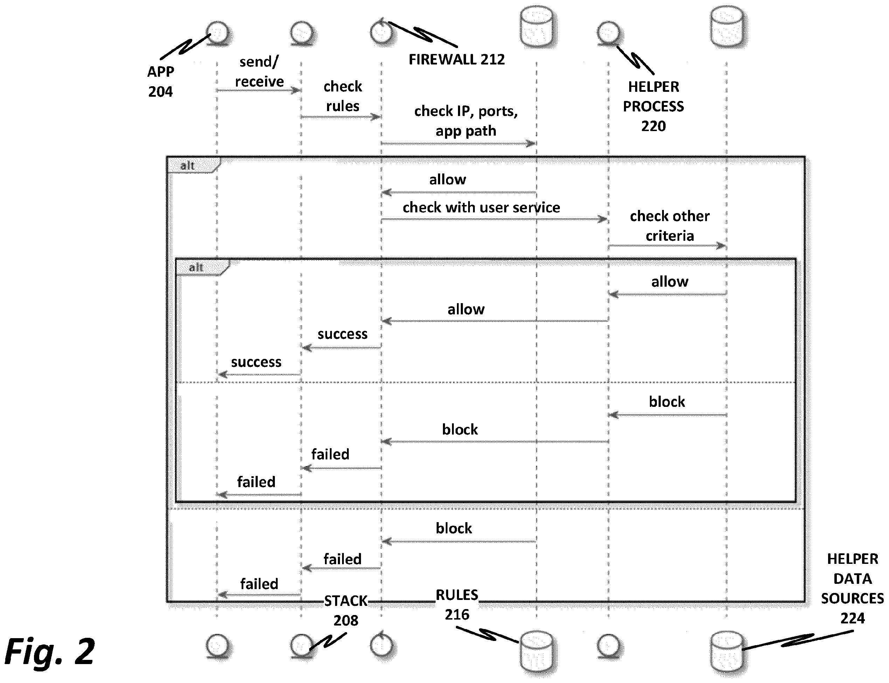

**FIGURE 2** is a signal flow diagram illustrating signals and information that may be passed between various components in this system. This includes an application 204, a TCP/IP network stack 208, a firewall 212, a rules database 216, including static and/or dynamic firewall rules, a helper process 220, and a set of helper data sources 224. Certain aspects of FIGURE 2 include signal flows that may be associated with known or existing architectures. This may include the use of a kernel space application firewall and, in this illustration, firewall 212 is intended to represent a kernel space application firewall, although the architecture illustrated herein is useful in other contexts as well. Following the signal flow, application 204 sends or receives data via TCP/IP network stack 208. Network stack 208 performs a rule check with firewall 212, which may check the source and destination IP addresses, the source and destination ports, the application path, or other information available to the firewall at the network driver level. Firewall 212 queries its rules database 216 to determine whether the connection should be allowed or blocked. Firewall 212 may also query helper process 220, which may, for example, check with the user service to determine which connections should be allowed or blocked. Helper process 220 may query helper data sources 224 to check other criteria for determining whether to block or allow the connection.

In one illustrative path, firewall 212 may determine on its own, based on its static rules in rules database 216, to allow the connection, and this permission may be propagated through the network stack so that the communication is permitted. Alternatively, firewall 212 may determine to block the connection and, in this case TCP/IP stack 208 blocks the connection.

In another example, firewall 212 relies on a block or allow decision from helper process 220, which derives block or allow data from helper data sources 224. The decision to block or allow the connection may be propagated back to TCP/IP stack 208, and stack 208 may either allow the connection with a success message or block the connection with a failed message.

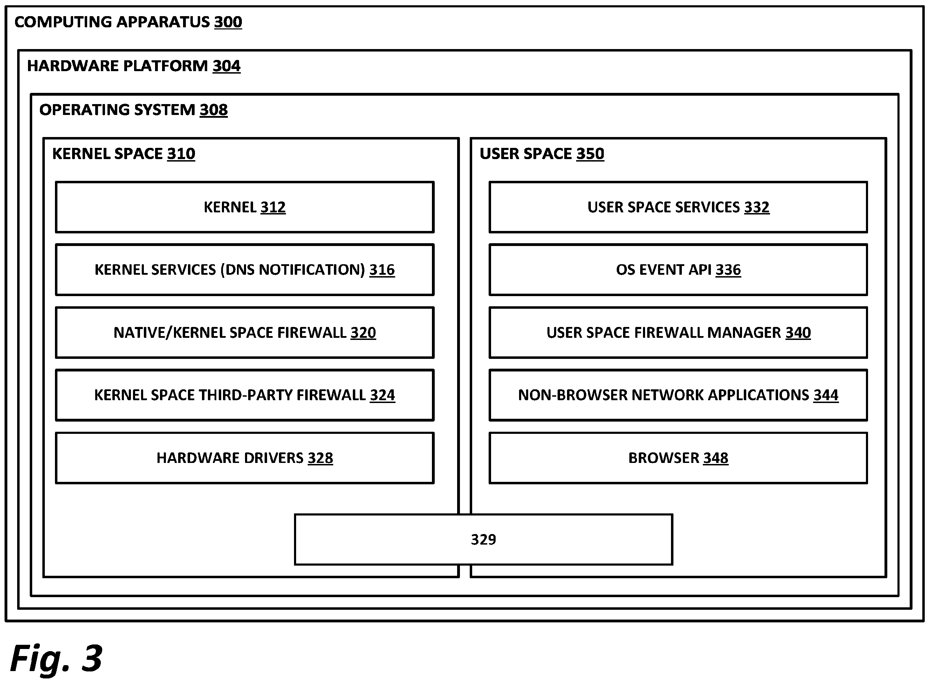

**FIGURE 3** is a block diagram of an illustrative computing apparatus 300. Computing apparatus 300 may be, for example, an endpoint computer, such as one used by an enterprise or home user. Computing apparatus 300 may be, by way of illustration, a desktop computer, a workstation, a laptop, a tablet, a mobile phone, or other suitable computing device.

Computing apparatus 300 operates on a hardware platform 304. An example of a hardware platform is illustrated in FIGURES 8 and 9 below. Hardware platform 304 may include at least a processor, a memory, and a network interface.

An operating system 308 may run on hardware platform 304. Operating system 308 may be any suitable open or closed operating system, such as Microsoft Windows, Linux, UNIX, Mac OS, Android, iOS, or similar. Operating system 308 may conventionally divide operating system services into a kernel space 310 and a user space 350. Kernel space 310 and user space 350 are provided as broad illustrative categories of divisions and, generally, kernel space 310 is considered to be the OS kernel and its drivers, which operate at a very low system level and with high privileges. In contrast, user space 350 operates generally at a higher level with fewer privileges and may, for example, be cognizant of user access controls and other restrictions.

A network stack 329 may partially span both kernel space 310 and user space 350. For example, network stack 329 may include the traditional seven layer OSI network stack, in which certain levels, for example up to level 5, operate within kernel space 310 while other levels, such as layer 6 and 7, operate within user space 350. However, this should not be understood to be a hard dividing line and, depending on the application and OS architecture, various layers of network stack 329 may appropriately reside within kernel space 310 and/or user space 350.

Within kernel space 310, there is a kernel 312, such as the Windows kernel, the Linux kernel, the BSD kernel, or some other appropriate kernel. Kernel space 310 may also include a number of kernel services 316. For example, one kernel service may include a DNS notification service, which monitors DNS queries made via the kernel's DNS driver and provides notifications of those DNS queries and the associated responses to applications that subscribe to the service.

Within kernel space 310, there may be a native or kernel space firewall 320. This may be a firewall natively provided by the operating system or the OS vendor. Most modern operating systems include some kind of built-in kernel space firewall application. There may also be a kernel space third-party firewall 324. This may be a firewall provided by a software vendor and may replace or supplement native firewall 320. Both native firewall 320 and third-party firewall 324 may be configurable via appropriate APIs, configuration files, or other interfaces to provide static or dynamic firewall rules.

Kernel space 310 may also include a number of hardware drivers 328, which provide an interface between hardware platform 304 and various applications within user space 350. Hardware drivers 328 may notably include a network driver to operate a wired or wireless network interface.

Operating system 308 may also provide user space 350. This may include user space services 332, which may operate with fewer or different privileges as compared to kernel services 316. Notably, a DNS query subscription service could also be provided as a user space service 332.

An operating system event API 336 provides an API for applications to subscribe to and consume services from the operating system.

User space 350 may also host a browser 348 and other non-browser network applications 344. These are applications that access the network for various purposes and are generally subject to static or dynamic firewall rules enforced by one or both of native firewall 320 and kernel space third-party firewall 324. Network applications 344 and/or browser 348 may also include various plug-ins that provide additional functionality. An example of one such plug-in is a URL reputation manager, such as McAfee WebAdvisor or other.

In addition to or instead of providing traditional antivirus or security measures, user space firewall manager 340 may provide asynchronous management of one or both of native firewall 320 and third-party firewall 324. This may include writing static or dynamic firewall rules to block or allow certain traffic according to information or inferences provided by user space firewall manager 340.

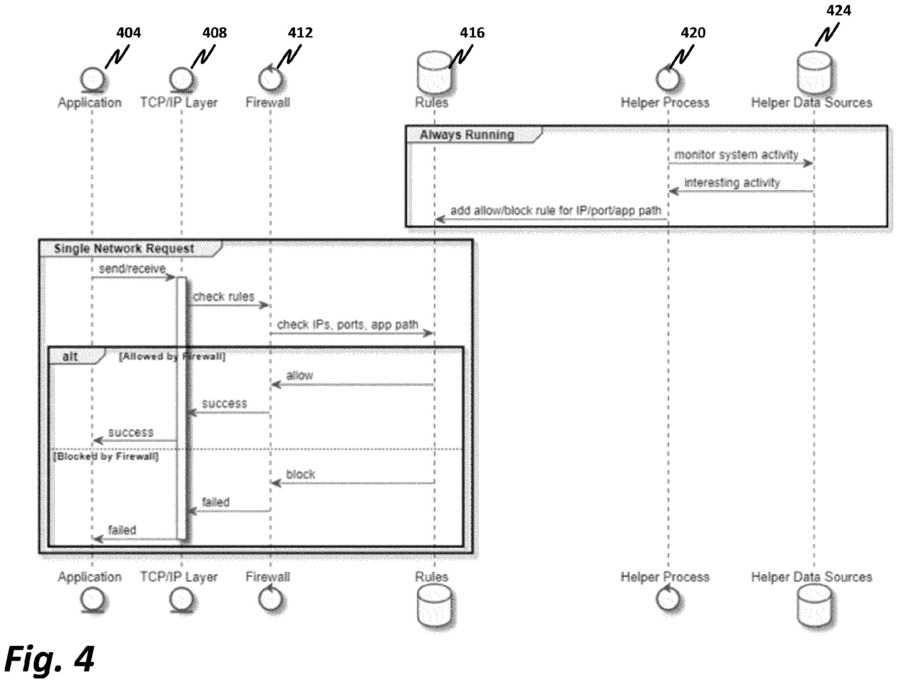

**FIGURE 4** is a signal flow diagram illustrating the use of a user space firewall manager 340. In this example, user space firewall manager 340 does not sit in line in the network stack with firewall 412. Thus, user space firewall manager 340 does not generally provide an in-line delay to network transactions.

In this example, application 404 communicates via network stack 408 as managed by firewall 412. In the traditional management of an application firewall, application 404 provides a single network request to send or receive data. TCP/IP stack 408 receives the request and queries firewall 412 to check the appropriate firewall rules to determine whether to allow or to block the transaction.

Firewall 412 checks its rules database 416 to determine source and destination IPs, source and destination ports, application paths, or other information on which firewall 412 may base its decision. Rules 416 may return an appropriate rule with logic to either block or allow the transaction. Firewall 412, based on the decision received from or based on rules database 416, notifies TCP/IP stack 408 to either block or allow the transaction. If the transaction is to be allowed, then a success signal is propagated from firewall 412 to TCP/IP layer 408 and down to application 404. The transaction is then permitted. If firewall 412 determines to block the transaction, then a failed signal is propagated from firewall 412 to seek TCP/IP network stack 408 and down to application 404. In that case, the transaction is not permitted, and the network activity is blocked.

As noted above, user space firewall manager 340 operates asynchronously to firewall 412. Firewall manager 340 may, for example, subscribe to DNS query notifications or use other data sources 424 along with a helper process 420, as necessary, to asynchronously determine how to treat application 404 and its network connections. As noted above, these decisions can often be made on the order of milliseconds or seconds and can thus be enforced before application 404 has an opportunity to do substantial malicious work. Firewall manager 340 may operate with helper process 420 to monitor system activity from helper data sources 424. Helper data sources 424 may include both local data sources, such as operating system events, network traces, and caste reputations, as well as remote, third-party, or cloud-based services or data. For example, firewall manager 340 may subscribe to an external cloud-based security service or URL reputations service which may provide additional information. Helper process 420 uses helper data sources 424 to identify interesting activity. Based on the interesting activity, firewall manager 340 may determine to allow or block certain traffic and may then write allow or block rules based on given IP addresses, ports, application paths, or other data to rules database 416. Once firewall manager 340 has written the new rules, it may apply the rules, such as by restarting firewall 412, reloading the rules, or otherwise causing firewall manager 412 to immediately begin enforcing the new rules. This helps to ensure that any ongoing or new network activity for application 404 will be subject to the new rules. For example, if firewall manager 340 determines that application 404 is malicious and network activity should be blocked, then applying the new firewall rules may interrupt large-scale uploads or downloads once the next packet is sent or received. Thus, even if application 404 is able to begin a malicious transaction, the malicious transaction may not complete successfully.

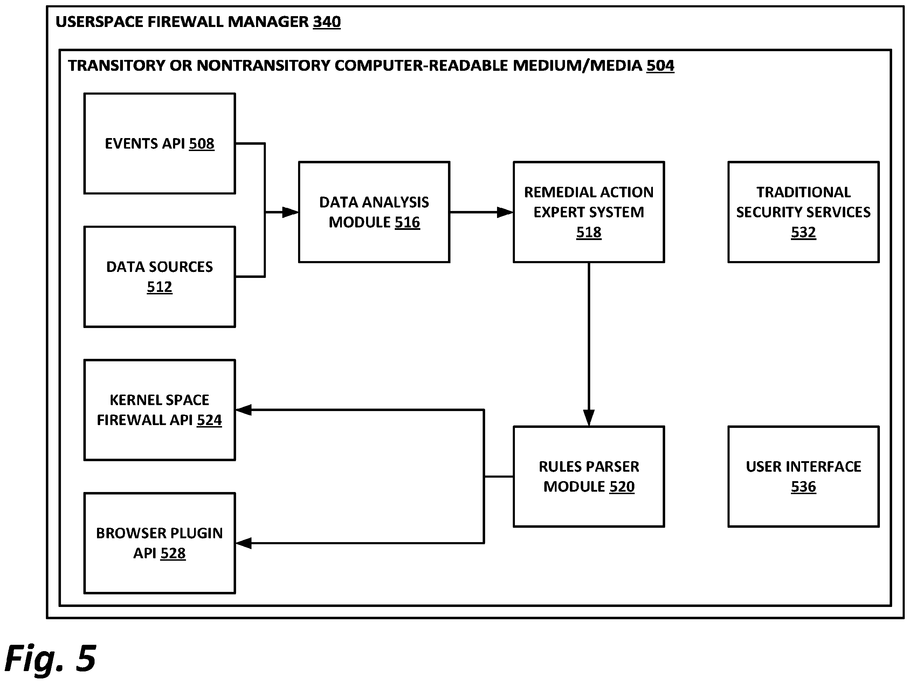

**FIGURE 5** is a block diagram of selected elements of a user space firewall manager 340. User space firewall manager 340 may reside on one or more transitory or non-transitory computer readable storage media 504.

User space firewall manager 340 includes a number of logical functions or processes disclosed here as blocks. These should be understood to illustrate functional aspects of user space firewall manager 340 and are not intended to imply a physical location or situs for the disclosed elements. Some functions may be split into multiple blocks and, in other cases, functions may span different blocks. Furthermore, the instructions may be stored on multiple physical media and may run on separate devices or in separate virtual machines or containers as appropriate to a given embodiment.

Firewall manager 340 includes an events API 508, which provides access to event notifications, such as from the operating system in kernel space and/or in user space. File manager 340 may also receive relevant information from data sources 512. These data sources may include local data sources, cached data, and third-party, cloud, or remote resources.

A data analysis module 516 receives events and data from events API 508 and data sources 512, and analyzes the data to determine how to treat certain traffic. Data analysis module 516 may normalize, condition, or otherwise analyze data to place it in a suitable and consumable form for the firewall manager. Data analysis module 516 may also tag data, indicate sources of data, and otherwise organize data so that they are more useful.

A remedial action expert system 518 receives the tagged, organized, sorted, conditioned, or otherwise modified data from data analysis module 516 and determines how to act on the data. Expert system 518 may include, in some examples, machine learning or artificial intelligence modules, heuristic models, lookup tables, hand-coded logic flows, and other analysis tools to determine the appropriate action for given data. This may include, for example, consuming reputations for URLs or IP addresses, analyzing dependency trees for processes to determine which processes are related, analyzing command line arguments for indications of processes to look for suspicious flags, performing visual analysis of websites to look for suspicious features, computer vision of binaries to identify malware features, or any other appropriate analysis to classify objects on the computing device and their associated network flows. Remedial action expert system 518 may then determine appropriate rules for handling traffic from given applications, objects, services, disaggregated objects, or others.

Remedial action expert system 518 provides the necessary rules to a rules parser module 520, which may take abstract rules provided by remedial action expert system 518 and convert them into concrete static or dynamic firewall rules that can be written, for example, to a firewall configuration file or that can be exported to the firewall via an appropriate API. Parser module 520 may also create rules for a browser plug-in or other auxiliary program that enforces rules for a particular application. This is particularly useful in the context of browsers because some modern browsers use their own encrypted DNS services rather than going through the operating system DNS lookup module. Thus, the operating system may not have visibility into those DNS queries, and firewall manager 340 may not have visibility into those lookups. However, a browser plug-in can interoperate with firewall manager 340 to provide data via data sources 512 so that firewall manager 340 can still perform its intended function. Thus, rules parser module 520 may export appropriate rules to kernel space firewall API 524 and via browser plug-in API 528.

In this embodiment, user space firewall manager 340 also includes a module to provide traditional security services 532. Services module 532 may provide traditional anti-malware/antivirus and other security applications. These can be provided within firewall manager 340 or as a separate module that may, in some cases, interoperate with firewall manager 340 to provide a comprehensive system security architecture.

Firewall manager 340 may also include a user interface 536, which may include a graphical user interface (GUI) that an operator can use to configure options, such as changing the sensitivity of the firewall manager, marking known binaries as safe or unsafe, providing feedback, or consuming information from firewall manager 340.

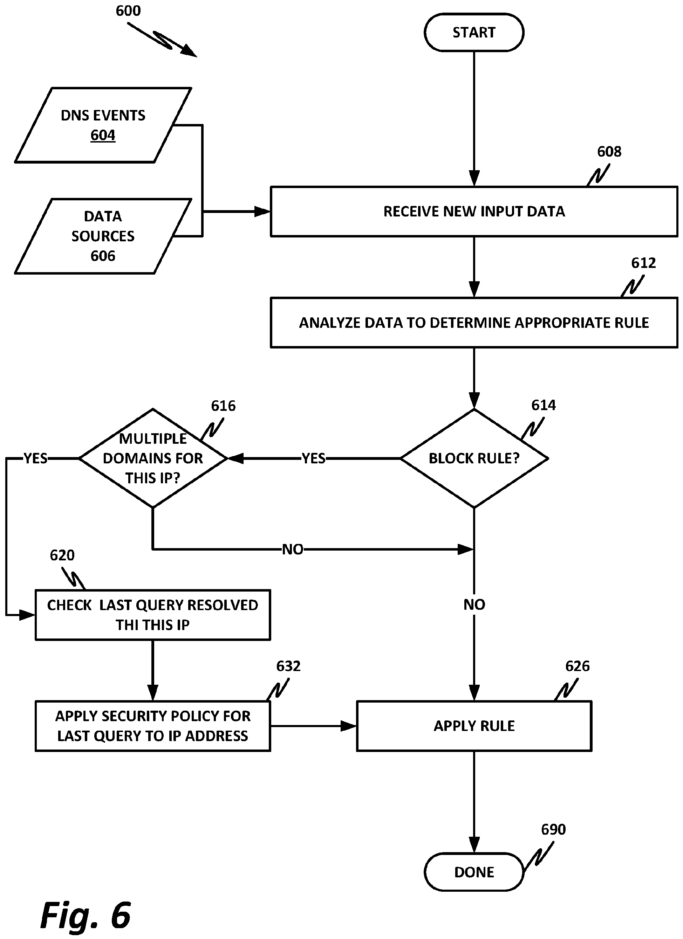

**FIGURE 6** discloses a flowchart 600 of a method of managing firewall rules. One of the important functions of firewall manager 340 is to provide static or dynamic firewall rules for a native or third-party kernel space firewall. Method 600 includes logical flows for handling traffic based on a reputation. The reputation may be derived, for example, from DNS events 604 and data sources 606. In block 608, the system receives new input data from DNS events 604 and data sources 606.

In block 612, the system may analyze the incoming data to determine an appropriate rule. This analysis can take the form of heuristics, hand-coded logic, AI, ML, and other appropriate logic flows. Any appropriate algorithm can be used for determining an appropriate action for a given application, IP address, URL, domain name, binary application, application path, or other data source. Advantageously, the data need not be limited to the types of data that are available to a kernel space application firewall. Rather, the data can expansively include any data that are available on the system and data that may be received from remote sources, such as the cloud or third-party services. The security application may provide traditional antivirus or security services to the system based on these data and also has the ability specifically to manage network traffic via an API into the kernel space firewall. Thus, in block 612, the system analyzes the data and determines an appropriate rule, which may include, among other security actions, an appropriate firewall rule.

In decision block 614, the system determines whether the given rule is a block rule. If the rule is not a block rule, and conversely is an allow rule, then no further action may be necessary. In block 626, the system applies the rule which, in the case of allowing, may simply mean leaving the firewall unmodified, although it may also include providing a specific exception within the firewall to allow traffic that belongs to a class that might otherwise be blocked.

Returning to block 614, if the rule is a block rule, then another consideration is whether virtual hosting plays a role. For example, many smaller enterprises do not pay for a dedicated server with its own dedicated IP address. Rather, smaller enterprises may subscribe to a domain hosting service wherein multiple domain and subdomains may be hosted on a single IP address. In that case, an IP address may be associated with a mixture of both malicious and benign traffic. Thus, in decision block 616, the system determines whether there are multiple domains resolved for the given IP. In this case, it may be necessary to allow some domains so that the user can continue accessing desirable domains, while blocking other domains to ensure that malicious traffic does not get through.

If there are not multiple domains, then the security policy can simply be applied to the IP address as a whole and, in block 626, the system applies the rule to the domain or to the IP address in full.

Returning to decision block 616, if there are multiple domains for the given IP, then the system may need to determine which domain name the user is accessing on the IP at the given moment. Thus, in block 620, the system may check the DNS query logs or subscribe to DNS query notifications to determine the last domain name that was queried that resolved to the given IP address. This may provide a state machine. In an initial state, the IP address may be allowed by default. However, when a reputation is received that indicates a negative reputation for the domain name, then a static firewall rule may be written to block the IP address. The IP address remains in the blocked state unless or until there is a query that resolves to the same IP address, but that is for a domain name that has a benign or useful reputation. In that case, a new firewall rule is written to unblock the IP address. The IP address remains unblocked unless and until there is a new query to a domain name with a malicious reputation, in which case the IP address may move to a blocked state again.

In block 632, the system applies the policy for the last query that resolved to the given IP address. This may include blocking or unblocking the IP address via a static firewall rule as necessary.

In block 626, the appropriate rule is applied to the IP address. In block 690, the method is done.

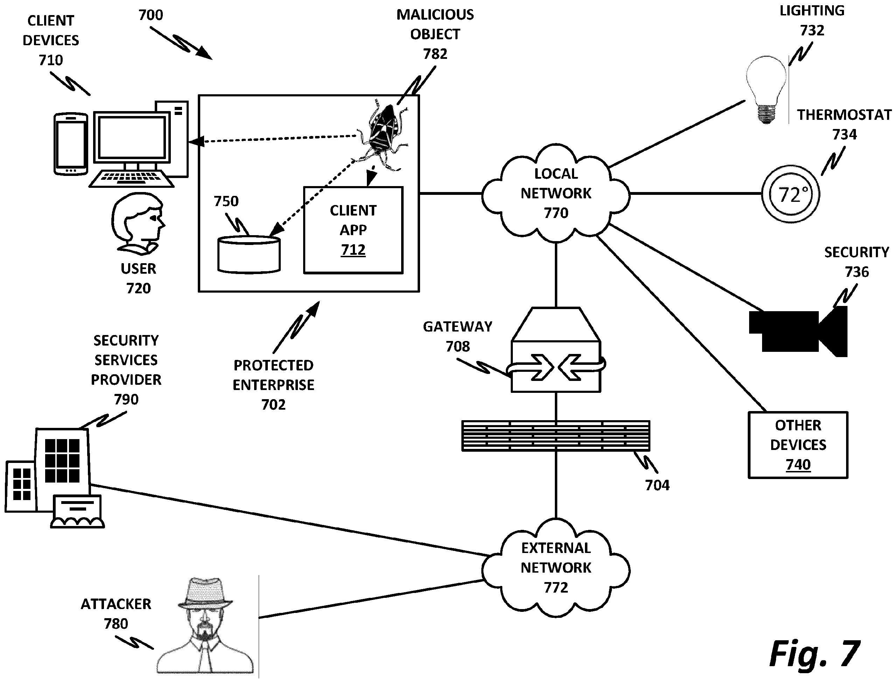

**FIGURE 7** is a block diagram of a security ecosystem 700. In the example of FIGURE 7, security ecosystem 700 may be an enterprise, a small business, a charity, a government entity, a data center, a telecommunications provider, a "smart home" with computers, smart phones, and various internet of things (IoT) devices, or any other suitable ecosystem. Security ecosystem 700 is provided herein as an illustrative and nonlimiting example of a system that may employ, and benefit from, the teachings of the present specification.

Security ecosystem 700 may include one or more protected enterprises 702. A single protected enterprise 702 is illustrated here for simplicity, and could be a business enterprise, a government entity, a family, a nonprofit organization, a church, or any other organization that may subscribe to security services provided, for example, by security services provider 790.

Within security ecosystem 700, one or more users 720 operate one or more client devices 710. A single user 720 and single client device 710 are illustrated here for simplicity, but a home or enterprise may have multiple users, each of which may have multiple devices, such as desktop computers, laptop computers, smart phones, tablets, hybrids, or similar.

Client devices 710 may be communicatively coupled to one another and to other network resources via local network 770. Local network 770 may be any suitable network or combination of one or more networks operating on one or more suitable networking protocols, including a local area network, a home network, an intranet, a virtual network, a wide area network, a wireless network, a cellular network, or the internet (optionally accessed via a proxy, virtual machine, or other similar security mechanism) by way of nonlimiting example. Local network 770 may also include one or more servers, firewalls, routers, switches, security appliances, antivirus servers, or other network devices, which may be single-purpose appliances, virtual machines, containers, or functions. Some functions may be provided on client devices 710.

In this illustration, local network 770 is shown as a single network for simplicity, but in some embodiments, local network 770 may include any number of networks, such as one or more intranets connected to the internet. Local network 770 may also provide access to an external network, such as the internet, via external network 772. External network 772 may similarly be any suitable type of network.

Local network 770 may connect to the internet via gateway 708, which may be responsible, among other things, for providing a logical boundary between local network 770 and external network 772. Local network 770 may also provide services such as dynamic host configuration protocol (DHCP), gateway services, router services, and switching services, and may act as a security portal across local boundary 704.

In some embodiments, gateway 708 could be a simple home router, or could be a sophisticated enterprise infrastructure including routers, gateways, firewalls, security services, deep packet inspection, web servers, or other services.

In further embodiments, gateway 708 may be a standalone internet appliance. Such embodiments are popular in cases in which ecosystem 700 includes a home or small business. In other cases, gateway 708 may run as a virtual machine or in another virtualized manner. In larger enterprises that features service function chaining (SFC) or NFV, gateway 708 may be include one or more service functions and/or virtualized network functions.

Local network 770 may also include a number of discrete IoT devices. For example, local network 770 may include IoT functionality to control lighting 732, thermostats or other environmental controls 734, a security system 736, and any number of other devices 740. Other devices 740 may include, as illustrative and nonlimiting examples, network attached storage (NAS), computers, printers, smart televisions, smart refrigerators, smart vacuum cleaners and other appliances, and network connected vehicles.

Local network 770 may communicate across local boundary 704 with external network 772. Local boundary 704 may represent a physical, logical, or other boundary. External network 772 may include, for example, websites, servers, network protocols, and other network-based services. In one example, an attacker 780 (or other similar malicious or negligent actor) also connects to external network 772. A security services provider 790 may provide services to local network 770, such as security software, security updates, network appliances, or similar. For example, MCAFEE, LLC provides a comprehensive suite of security services that may be used to protect local network 770 and the various devices connected to it.

It may be a goal of users 720 to successfully operate devices on local network 770 without interference from attacker 780. In one example, attacker 780 is a malware author whose goal or purpose is to cause malicious harm or mischief, for example, by injecting malicious object 782 into client device 710. Once malicious object 782 gains access to client device 710, it may try to perform work such as social engineering of user 720, a hardware-based attack on client device 710, modifying storage 750 (or volatile memory), modifying client application 712 (which may be running in memory), or gaining access to local resources. Furthermore, attacks may be directed at IoT objects. IoT objects can introduce new security challenges, as they may be highly heterogeneous, and in some cases may be designed with minimal or no security considerations. To the extent that these devices have security, it may be added on as an afterthought. Thus, IoT devices may in some cases represent new attack vectors for attacker 780 to leverage against local network 770.

Malicious harm or mischief may take the form of installing root kits or other malware on client devices 710 to tamper with the system, installing spyware or adware to collect personal and commercial data, defacing websites, operating a botnet such as a spam server, or simply to annoy and harass users 720. Thus, one aim of attacker 780 may be to install his malware on one or more client devices 710 or any of the IoT devices described. As used throughout this specification, malicious software ("malware") includes any object configured to provide unwanted results or do unwanted work. In many cases, malware objects will be executable objects, including, by way of nonlimiting examples, viruses, Trojans, zombies, rootkits, backdoors, worms, spyware, adware, ransomware, dialers, payloads, malicious browser helper objects, tracking cookies, loggers, or similar objects designed to take a potentially-unwanted action, including, by way of nonlimiting example, data destruction, data denial, covert data collection, browser hijacking, network proxy or redirection, covert tracking, data logging, keylogging, excessive or deliberate barriers to removal, contact harvesting, and unauthorized self-propagation. In some cases, malware could also include negligently-developed software that causes such results even without specific intent.

In enterprise contexts, attacker 780 may also want to commit industrial or other espionage, such as stealing classified or proprietary data, stealing identities, or gaining unauthorized access to enterprise resources. Thus, attacker 780's strategy may also include trying to gain physical access to one or more client devices 710 and operating them without authorization, so that an effective security policy may also include provisions for preventing such access.

In another example, a software developer may not explicitly have malicious intent, but may develop software that poses a security risk. For example, a well-known and often-exploited security flaw is the so-called buffer overrun, in which a malicious user is able to enter an overlong string into an input form and thus gain the ability to execute arbitrary instructions or operate with elevated privileges on a computing device. Buffer overruns may be the result, for example, of poor input validation or use of insecure libraries, and in many cases arise in nonobvious contexts. Thus, although not malicious, a developer contributing software to an application repository or programming an IoT device may inadvertently provide attack vectors for attacker 780. Poorly-written applications may also cause inherent problems, such as crashes, data loss, or other undesirable behavior. Because such software may be desirable itself, it may be beneficial for developers to occasionally provide updates or patches that repair vulnerabilities as they become known. However, from a security perspective, these updates and patches are essentially new objects that must themselves be validated.

Protected enterprise 702 may contract with or subscribe to a security services provider 790, which may provide security services, updates, antivirus definitions, patches, products, and services. MCAFEE, LLC is a nonlimiting example of such a security services provider that offers comprehensive security and antivirus solutions. In some cases, security services provider 790 may include a threat intelligence capability such as the global threat intelligence (GTI^{™}) database provided by MCAFEE, LLC, or similar competing products. Security services provider 790 may update its threat intelligence database by analyzing new candidate malicious objects as they appear on client networks and characterizing them as malicious or benign.

Other security considerations within security ecosystem 700 may include parents' or employers' desire to protect children or employees from undesirable content, such as pornography, adware, spyware, age-inappropriate content, advocacy for certain political, religious, or social movements, or forums for discussing illegal or dangerous activities, by way of nonlimiting example.

**FIGURE 8** is a block diagram of a hardware platform 800. Although a particular configuration is illustrated here, there are many different configurations of hardware platforms, and this embodiment is intended to represent the class of hardware platforms that can provide a computing device. Furthermore, the designation of this embodiment as a "hardware platform" is not intended to require that all embodiments provide all elements in hardware. Some of the elements disclosed herein may be provided, in various embodiments, as hardware, software, firmware, microcode, microcode instructions, hardware instructions, hardware or software accelerators, or similar. Furthermore, in some embodiments, entire computing devices or platforms may be virtualized, on a single device, or in a data center where virtualization may span one or a plurality of devices. For example, in a "rackscale architecture" design, disaggregated computing resources may be virtualized into a single instance of a virtual device. In that case, all of the disaggregated resources that are used to build the virtual device may be considered part of hardware platform 800, even though they may be scattered across a data center, or even located in different data centers.

Hardware platform 800 is configured to provide a computing device. In various embodiments, a "computing device" may be or comprise, by way of nonlimiting example, a computer, workstation, server, mainframe, virtual machine (whether emulated or on a "bare metal" hypervisor), network appliance, container, IoT device, high performance computing (HPC) environment, a data center, a communications service provider infrastructure (e.g., one or more portions of an Evolved Packet Core), an in-memory computing environment, a computing system of a vehicle (e.g., an automobile or airplane), an industrial control system, embedded computer, embedded controller, embedded sensor, personal digital assistant, laptop computer, cellular telephone, internet protocol (IP) telephone, smart phone, tablet computer, convertible tablet computer, computing appliance, receiver, wearable computer, handheld calculator, or any other electronic, microelectronic, or microelectromechanical device for processing and communicating data. At least some of the methods and systems disclosed in this specification may be embodied by or carried out on a computing device.

In the illustrated example, hardware platform 800 is arranged in a point-to-point (PtP) configuration. This PtP configuration is popular for personal computer (PC) and server-type devices, although it is not so limited, and any other bus type may be used.

Hardware platform 800 is an example of a platform that may be used to implement embodiments of the teachings of this specification. For example, instructions could be stored in storage 850. Instructions could also be transmitted to the hardware platform in an ethereal form, such as via a network interface, or retrieved from another source via any suitable interconnect. Once received (from any source), the instructions may be loaded into memory 804, and may then be executed by one or more processor 802 to provide elements such as an operating system 806, operational agents 808, or data 812.

Hardware platform 800 may include several processors 802. For simplicity and clarity, only processors PROC0 802-1 and PROC1 802-2 are shown. Additional processors (such as 2, 4, 8, 16, 24, 32, 64, or 128 processors) may be provided as necessary, while in other embodiments, only one processor may be provided. Processors may have any number of cores, such as 1, 2, 4, 8, 16, 24, 32, 64, or 128 cores.

Processors 802 may be any type of processor and may communicatively couple to chipset 816 via, for example, PtP interfaces. Chipset 816 may also exchange data with other elements, such as a high performance graphics adapter 822. In alternative embodiments, any or all of the PtP links illustrated in FIGURE 8 could be implemented as any type of bus, or other configuration rather than a PtP link. In various embodiments, chipset 816 may reside on the same die or package as a processor 802 or on one or more different dies or packages. Each chipset may support any suitable number of processors 802. A chipset 816 (which may be a chipset, uncore, Northbridge, Southbridge, or other suitable logic and circuitry) may also include one or more controllers to couple other components to one or more central processor units (CPU).

Two memories, 804-1 and 804-2 are shown, connected to PROC0 802-1 and PROC1 802-2, respectively. As an example, each processor is shown connected to its memory in a direct memory access (DMA) configuration, though other memory architectures are possible, including ones in which memory 804 communicates with a processor 802 via a bus. For example, some memories may be connected via a system bus, or in a data center, memory may be accessible in a remote DMA (RDMA) configuration.

Memory 804 may include any form of volatile or nonvolatile memory including, without limitation, magnetic media (e.g., one or more tape drives), optical media, flash, random access memory (RAM), double data rate RAM (DDR RAM) nonvolatile RAM (NVRAM), static RAM (SRAM), dynamic RAM (DRAM), persistent RAM (PRAM), data-centric (DC) persistent memory (e.g., Intel Optane/3D-crosspoint), cache, Layer 1 (L1) or Layer 2 (L2) memory, on-chip memory, registers, virtual memory region, read-only memory (ROM), flash memory, removable media, tape drive, cloud storage, or any other suitable local or remote memory component or components. Memory 804 may be used for short, medium, and/or long-term storage. Memory 804 may store any suitable data or information utilized by platform logic. In some embodiments, memory 804 may also comprise storage for instructions that may be executed by the cores of processors 802 or other processing elements (e.g., logic resident on chipsets 816) to provide functionality.

In certain embodiments, memory 804 may comprise a relatively low-latency volatile main memory, while storage 850 may comprise a relatively higher-latency nonvolatile memory. However, memory 804 and storage 850 need not be physically separate devices, and in some examples may represent simply a logical separation of function (if there is any separation at all). It should also be noted that although DMA is disclosed by way of nonlimiting example, DMA is not the only protocol consistent with this specification, and that other memory architectures are available.

Certain computing devices provide main memory 804 and storage 850, for example, in a single physical memory device, and in other cases, memory 804 and/or storage 850 are functionally distributed across many physical devices. In the case of virtual machines or hypervisors, all or part of a function may be provided in the form of software or firmware running over a virtualization layer to provide the logical function, and resources such as memory, storage, and accelerators may be disaggregated (i.e., located in different physical locations across a data center). In other examples, a device such as a network interface may provide only the minimum hardware interfaces necessary to perform its logical operation, and may rely on a software driver to provide additional necessary logic. Thus, each logical block disclosed herein is broadly intended to include one or more logic elements configured and operable for providing the disclosed logical operation of that block. As used throughout this specification, "logic elements" may include hardware, external hardware (digital, analog, or mixed-signal), software, reciprocating software, services, drivers, interfaces, components, modules, algorithms, sensors, components, firmware, hardware instructions, microcode, programmable logic, or objects that can coordinate to achieve a logical operation.

Graphics adapter 822 may be configured to provide a human-readable visual output, such as a command-line interface (CLI) or graphical desktop such as Microsoft Windows, Apple OSX desktop, or a Unix/Linux X Window System-based desktop. Graphics adapter 822 may provide output in any suitable format, such as a coaxial output, composite video, component video, video graphics array (VGA), or digital outputs such as digital visual interface (DVI), FPDLink, DisplayPort, or high definition multimedia interface (HDMI), by way of nonlimiting example. In some examples, graphics adapter 822 may include a hardware graphics card, which may have its own memory and its own graphics processing unit (GPU).

Chipset 816 may be in communication with a bus 828 via an interface circuit. Bus 828 may have one or more devices that communicate over it, such as a bus bridge 832, I/O devices 835, accelerators 846, communication devices 840, and a keyboard and/or mouse 838, by way of nonlimiting example. In general terms, the elements of hardware platform 800 may be coupled together in any suitable manner. For example, a bus may couple any of the components together. A bus may include any known interconnect, such as a multi-drop bus, a mesh interconnect, a fabric, a ring interconnect, a round-robin protocol, a PtP interconnect, a serial interconnect, a parallel bus, a coherent (e.g., cache coherent) bus, a layered protocol architecture, a differential bus, or a Gunning transceiver logic (GTL) bus, by way of illustrative and nonlimiting example.

Communication devices 840 can broadly include any communication not covered by a network interface and the various I/O devices described herein. This may include, for example, various universal serial bus (USB), FireWire, Lightning, or other serial or parallel devices that provide communications.

I/O Devices 835 may be configured to interface with any auxiliary device that connects to hardware platform 800 but that is not necessarily a part of the core architecture of hardware platform 800. A peripheral may be operable to provide extended functionality to hardware platform 800, and may or may not be wholly dependent on hardware platform 800. In some cases, a peripheral may be a computing device in its own right. Peripherals may include input and output devices such as displays, terminals, printers, keyboards, mice, modems, data ports (e.g., serial, parallel, USB, Firewire, or similar), network controllers, optical media, external storage, sensors, transducers, actuators, controllers, data acquisition buses, cameras, microphones, speakers, or external storage, by way of nonlimiting example.

In one example, audio I/O 842 may provide an interface for audible sounds, and may include in some examples a hardware sound card. Sound output may be provided in analog (such as a 3.5mm stereo jack), component ("RCA") stereo, or in a digital audio format such as S/PDIF, AES3, AES47, HDMI, USB, Bluetooth, or Wi-Fi audio, by way of nonlimiting example. Audio input may also be provided via similar interfaces, in an analog or digital form.

Bus bridge 832 may be in communication with other devices such as a keyboard/mouse 838 (or other input devices such as a touch screen, trackball, etc.), communication devices 840 (such as modems, network interface devices, peripheral interfaces such as PCI or PCIe, or other types of communication devices that may communicate through a network), audio I/O 842, a data storage device 844, and/or accelerators 846. In alternative embodiments, any portions of the bus architectures could be implemented with one or more PtP links.

Operating system 806 may be, for example, Microsoft Windows, Linux, UNIX, Mac OS X, iOS, MS-DOS, or an embedded or real-time operating system (including embedded or real-time flavors of the foregoing). In some embodiments, a hardware platform 800 may function as a host platform for one or more guest systems that invoke application (e.g., operational agents 808).

Operational agents 808 may include one or more computing engines that may include one or more nontransitory computer-readable mediums having stored thereon executable instructions operable to instruct a processor to provide operational functions. At an appropriate time, such as upon booting hardware platform 800 or upon a command from operating system 806 or a user or security administrator, a processor 802 may retrieve a copy of the operational agent (or software portions thereof) from storage 850 and load it into memory 804. Processor 802 may then iteratively execute the instructions of operational agents 808 to provide the desired methods or functions.

As used throughout this specification, an "engine" includes any combination of one or more logic elements, of similar or dissimilar species, operable for and configured to perform one or more methods provided by the engine. In some cases, the engine may be or include a special integrated circuit designed to carry out a method or a part thereof, a field-programmable gate array (FPGA) programmed to provide a function, a special hardware or microcode instruction, other programmable logic, and/or software instructions operable to instruct a processor to perform the method. In some cases, the engine may run as a "daemon" process, background process, terminate-and-stay-resident program, a service, system extension, control panel, bootup procedure, basic in/output system (BIOS) subroutine, or any similar program that operates with or without direct user interaction. In certain embodiments, some engines may run with elevated privileges in a "driver space" associated with ring 0, 1, or 2 in a protection ring architecture. The engine may also include other hardware, software, and/or data, including configuration files, registry entries, application programming interfaces (APIs), and interactive or user-mode software by way of nonlimiting example.

In some cases, the function of an engine is described in terms of a "circuit" or "circuitry to" perform a particular function. The terms "circuit" and "circuitry" should be understood to include both the physical circuit, and in the case of a programmable circuit, any instructions or data used to program or configure the circuit.

Where elements of an engine are embodied in software, computer program instructions may be implemented in programming languages, such as an object code, an assembly language, or a high-level language such as OpenCL, FORTRAN, C, C++, JAVA, or HTML. These may be used with any compatible operating systems or operating environments. Hardware elements may be designed manually, or with a hardware description language such as Spice, Verilog, and VHDL. The source code may define and use various data structures and communication messages. The source code may be in a computer executable form (e.g., via an interpreter), or the source code may be converted (e.g., via a translator, assembler, or compiler) into a computer executable form, or converted to an intermediate form such as byte code. Where appropriate, any of the foregoing may be used to build or describe appropriate discrete or integrated circuits, whether sequential, combinatorial, state machines, or otherwise.

A network interface may be provided to communicatively couple hardware platform 800 to a wired or wireless network or fabric. A "network," as used throughout this specification, may include any communicative platform operable to exchange data or information within or between computing devices, including, by way of nonlimiting example, a local network, a switching fabric, an ad-hoc local network, Ethernet (e.g., as defined by the IEEE 802.3 standard), Fiber Channel, InfiniBand, Wi-Fi, or other suitable standard. Intel Omni-Path Architecture (OPA), TrueScale, Ultra Path Interconnect (UPI) (formerly called QuickPath Interconnect, QPI, or KTI), FibreChannel, Ethernet, FibreChannel over Ethernet (FCoE), InfiniBand, PCI, PCIe, fiber optics, millimeter wave guide, an internet architecture, a packet data network (PDN) offering a communications interface or exchange between any two nodes in a system, a local area network (LAN), metropolitan area network (MAN), wide area network (WAN), wireless local area network (WLAN), virtual private network (VPN), intranet, plain old telephone system (POTS), or any other appropriate architecture or system that facilitates communications in a network or telephonic environment, either with or without human interaction or intervention. A network interface may include one or more physical ports that may couple to a cable (e.g., an Ethernet cable, other cable, or waveguide).

In some cases, some or all of the components of hardware platform 800 may be virtualized, in particular the processor(s) and memory. For example, a virtualized environment may run on OS 806, or OS 806 could be replaced with a hypervisor or virtual machine manager. In this configuration, a virtual machine running on hardware platform 800 may virtualize workloads. A virtual machine in this configuration may perform essentially all of the functions of a physical hardware platform.

In a general sense, any suitably-configured processor can execute any type of instructions associated with the data to achieve the operations illustrated in this specification. Any of the processors or cores disclosed herein could transform an element or an article (for example, data) from one state or thing to another state or thing. In another example, some activities outlined herein may be implemented with fixed logic or programmable logic (for example, software and/or computer instructions executed by a processor).

Various components of the system depicted in FIGURE 8 may be combined in a SoC architecture or in any other suitable configuration. For example, embodiments disclosed herein can be incorporated into systems including mobile devices such as smart cellular telephones, tablet computers, personal digital assistants, portable gaming devices, and similar. These mobile devices may be provided with SoC architectures in at least some embodiments. An example of such an embodiment is provided in FIGURE 9. Such an SoC (and any other hardware platform disclosed herein) may include analog, digital, and/or mixed-signal, radio frequency (RF), or similar processing elements. Other embodiments may include a multichip module (MCM), with a plurality of chips located within a single electronic package and configured to interact closely with each other through the electronic package. In various other embodiments, the computing functionalities disclosed herein may be implemented in one or more silicon cores in application-specific integrated circuits (ASICs), FPGAs, and other semiconductor chips.

**FIGURE 9** is a block illustrating selected elements of an example SoC 900. At least some of the teachings of the present specification may be embodied on an SoC 900, or may be paired with an SoC 900. SoC 900 may include, or may be paired with, an advanced reduced instruction set computer machine (ARM) component. For example, SoC 900 may include or be paired with any ARM core, such as A-9, A-15, or similar. This architecture represents a hardware platform that may be useful in devices such as tablets and smartphones, by way of illustrative example, including Android phones or tablets, iPhone (of any version), iPad, Google Nexus, Microsoft Surface. SoC 900 could also be integrated into, for example, a PC, server, video processing components, laptop computer, notebook computer, netbook, or touch-enabled device.

As with hardware platform 800 above, SoC 900 may include multiple cores 902-1 and 902-2. In this illustrative example, SoC 900 also includes an L2 cache control 904, a GPU 906, a video codec 908, a liquid crystal display (LCD) I/F 910 and an interconnect 912. L2 cache control 904 can include a bus interface unit 914, a L2 cache 916. Liquid crystal display (LCD) I/F 910 may be associated with mobile industry processor interface (MIPI)/ HDMI links that couple to an LCD.

SoC 900 may also include a subscriber identity module (SIM) I/F 918, a boot ROM 920, a synchronous dynamic random access memory (SDRAM) controller 922, a flash controller 924, a serial peripheral interface (SPI) director 928, a suitable power control 930, a dynamic RAM (DRAM) 932, and flash 934. In addition, one or more embodiments include one or more communication capabilities, interfaces, and features such as instances of Bluetooth, a 3G modem, a global positioning system (GPS), and an 802.11 Wi-Fi.

Designers of integrated circuits such as SoC 900 (or other integrated circuits) may use intellectual property blocks (IP blocks) to simplify system design. An IP block is a modular, self-contained hardware block that can be easily integrated into the design. Because the IP block is modular and self-contained, the integrated circuit (IC) designer need only "drop in" the IP block to use the functionality of the IP block. The system designer can then make the appropriate connections to inputs and outputs.

IP blocks are often "black boxes." In other words, the system integrator using the IP block may not know, and need not know, the specific implementation details of the IP block. Indeed, IP blocks may be provided as proprietary third-party units, with no insight into the design of the IP block by the system integrator.

For example, a system integrator designing an SoC for a smart phone may use IP blocks in addition to the processor core, such as a memory controller, a nonvolatile memory (NVM) controller, Wi-Fi, Bluetooth, GPS, a fourth or fifth-generation network (4G or 5G), an audio processor, a video processor, an image processor, a graphics engine, a GPU engine, a security controller, and many other IP blocks. In many cases, each of these IP blocks has its own embedded microcontroller.

The foregoing outlines features of several embodiments so that those skilled in the art may better understand various aspects of the present disclosure. The foregoing detailed description sets forth examples of apparatuses, methods, and systems relating to a system for providing a userspace firewall manager accordance with one or more embodiments of the present disclosure. Features such as structure(s), function(s), and/or characteristic(s), for example, are described with reference to one embodiment as a matter of convenience; various embodiments may be implemented with any suitable one or more of the described features.

As used throughout this specification, the phrase "an embodiment" is intended to refer to one or more embodiments. Furthermore, different uses of the phrase "an embodiment" may refer to different embodiments. The phrases "in another embodiment" or "in a different embodiment" refer to an embodiment different from the one previously described, or the same embodiment with additional features. For example, "in an embodiment, features may be present. In another embodiment, additional features may be present." The foregoing example could first refer to an embodiment with features A, B, and C, while the second could refer to an embodiment with features A, B, C, and D, with features, A, B, and D, with features, D, E, and F, or any other variation.

In the foregoing description, various aspects of the illustrative implementations may be described using terms commonly employed by those skilled in the art to convey the substance of their work to others skilled in the art. It will be apparent to those skilled in the art that the embodiments disclosed herein may be practiced with only some of the described aspects. For purposes of explanation, specific numbers, materials, and configurations are set forth to provide a thorough understanding of the illustrative implementations. In some cases, the embodiments disclosed may be practiced without specific details. In other instances, well-known features are omitted or simplified so as not to obscure the illustrated embodiments.

For the purposes of the present disclosure and the appended claims, the article "a" refers to one or more of an item. The phrase "A or B" is intended to encompass the "inclusive or," e.g., A, B, or (A and B). "A and/or B" means A, B, or (A and B). For the purposes of the present disclosure, the phrase "A, B, and/or C" means A, B, C, (A and B), (A and C), (B and C), or (A, B, and C).

The embodiments disclosed can readily be used as the basis for designing or modifying other processes and structures to carry out the teachings of the present specification. Any equivalent constructions to those disclosed do not depart from the spirit and scope of the present disclosure. Design considerations may result in substitute arrangements, design choices, device possibilities, hardware configurations, software implementations, and equipment options.

As used throughout this specification, a "memory" is expressly intended to include both a volatile memory and a nonvolatile memory. Thus, for example, an "engine" as described above could include instructions encoded within a volatile or nonvolatile memory that, when executed, instruct a processor to perform the operations of any of the methods or procedures disclosed herein. It is expressly intended that this configuration reads on a computing apparatus "sitting on a shelf" in a non-operational state. For example, in this example, the "memory" could include one or more tangible, nontransitory computer-readable storage media that contain stored instructions. These instructions, in conjunction with the hardware platform (including a processor) on which they are stored may constitute a computing apparatus.

In other embodiments, a computing apparatus may also read on an operating device. For example, in this configuration, the "memory" could include a volatile or run-time memory (e.g., RAM), where instructions have already been loaded. These instructions, when fetched by the processor and executed, may provide methods or procedures as described herein.

In yet another embodiment, there may be one or more tangible, nontransitory computer-readable storage media having stored thereon executable instructions that, when executed, cause a hardware platform or other computing system, to carry out a method or procedure. For example, the instructions could be executable object code, including software instructions executable by a processor. The one or more tangible, nontransitory computer-readable storage media could include, by way of illustrative and nonlimiting example, a magnetic media (e.g., hard drive), a flash memory, a ROM, optical media (e.g., CD, DVD, Blu-Ray), nonvolatile random-access memory (NVRAM), nonvolatile memory (NVM) (e.g., Intel 3D Xpoint), or other nontransitory memory.

There are also provided herein certain methods, illustrated for example in flow charts and/or signal flow diagrams. The order or operations disclosed in these methods discloses one illustrative ordering that may be used in some embodiments, but this ordering is not intended to be restrictive, unless expressly stated otherwise. In other embodiments, the operations may be carried out in other logical orders. In general, one operation should be deemed to necessarily precede another only if the first operation provides a result required for the second operation to execute. Furthermore, the sequence of operations itself should be understood to be a nonlimiting example. In appropriate embodiments, some operations may be omitted as unnecessary or undesirable. In the same or in different embodiments, other operations not shown may be included in the method to provide additional results.

In certain embodiments, some of the components illustrated herein may be omitted or consolidated. In a general sense, the arrangements depicted in the FIGURES may be more logical in their representations, whereas a physical architecture may include various permutations, combinations, and/or hybrids of these elements.

With the numerous examples provided herein, interaction may be described in terms of two, three, four, or more electrical components. These descriptions are provided for purposes of clarity and example only. Any of the illustrated components, modules, and elements of the FIGURES may be combined in various configurations, all of which fall within the scope of this specification.

In certain cases, it may be easier to describe one or more functionalities by disclosing only selected elements. Such elements are selected to illustrate specific information to facilitate the description. The inclusion of an element in the FIGURES is not intended to imply that the element must appear in the disclosure, as claimed, and the exclusion of certain elements from the FIGURES is not intended to imply that the element is to be excluded from the disclosure as claimed. Similarly, any methods or flows illustrated herein are provided by way of illustration only. Inclusion or exclusion of operations in such methods or flows should be understood the same as inclusion or exclusion of other elements as described in this paragraph. Where operations are illustrated in a particular order, the order is a nonlimiting example only. Unless expressly specified, the order of operations may be altered to suit a particular embodiment.

Other changes, substitutions, variations, alterations, and modifications will be apparent to those skilled in the art. All such changes, substitutions, variations, alterations, and modifications fall within the scope of this specification.

To aid the United States Patent and Trademark Office (USPTO) and, any readers of any patent or publication flowing from this specification, the Applicant: (a) does not intend any of the appended claims to invoke paragraph (f) of 35 U.S.C. section 112, or its equivalent, as it exists on the date of the filing hereof unless the words "means for" or "steps for" are specifically used in the particular claims; and (b) does not intend, by any statement in the specification, to limit this disclosure in any way that is not otherwise expressly reflected in the appended claims, as originally presented or as amended.

## Claims

1. A computer-implemented software method, the method to execute within a non-kernel space of a host computer, the method comprising:
asynchronously monitoring network activity of network-enabled applications of the host computer;
responsive to the monitoring, and based on network behavior of a userspace application, create one or more firewall rules for a kernel-mode firewall; and
cause the kernel-mode firewall to enforce the one more firewall rules.

2. The computer-implemented software method of claim 1, wherein the non-kernel space is userspace.

3. The computer-implemented software method of claim 1 or 2, wherein the one or more firewall rules are static firewall rules.

4. The computer-implemented software method of one of the preceding claims, wherein the kernel-mode firewall is an operating system native firewall.

5. The computer-implemented software method of one of the preceding claims, wherein the kernel-mode firewall is a third-party firewall.

6. The computer-implemented software method of one of the preceding claims, further comprising communicating with the kernel-mode firewall only via a published interface definition.

7. The computer-implemented software method of one of the preceding claims, wherein asynchronously monitoring behavior of the network-enabled applications comprises subscribing to domain name system (DNS) query events from a local operating system, wherein asynchronously monitoring behavior of the network-enabled applications further comprises querying a cloud service for reputations for domain names or internet protocol (IP) addresses resolved via DNS queries.

8. The computer-implemented software method of one of the preceding claims, further comprising determining, within less than approximately five seconds, a firewall action for the userspace application, and creating a firewall rule to block an ongoing network operation for the userspace application, upon determining that the userspace application performs a malicious activity.

9. The computer-implemented software method of one of the preceding claims, further comprising providing a browser plugin to monitor browser activity.

10. The computer-implemented software method of one of the preceding claims, further comprising determining that the userspace application is not a web browser and does not use an operating system (OS)-provided domain name system (DNS) client, blocking network access for the userspace application, and notifying a user that the userspace application has been blocked because it circumvents the OS-provided DNS client.

11. The computer-implemented software method of one of the preceding claims, wherein creating the one or more firewall rules comprises determining that multiple domain names resolve to a common internet protocol (IP) address, and applying a first rule to a first domain of the IP address, and a second rule to a second domain of the IP address, comprising applying the first rule after determining that a most recent DNS query that resolved to the IP address was for the first domain, and applying the second rule after determining that the most recent DNS query that resolved to the IP address was for the second domain.

12. An apparatus comprising means for performing the method of any of claims 1 - 11.

13. The apparatus of claim 12, wherein the means for performing the method comprise a processor and a memory.

14. The apparatus of claim 13, wherein the memory comprises machine-readable instructions that, when executed, cause the apparatus to perform the method of any of claims 1-11.

15. At least one computer readable medium comprising instructions that, when executed, implement a method of one of claims 1 - 11 or realize an apparatus of one of claims 12 - 14.
